(19) Europäisches Patentamt / European Patent Office / Office européen des brevets

(11) **EP 4 723 183 A1**

(12) **EUROPEAN PATENT APPLICATION**

(43) Date of publication:
08.04.2026 Bulletin 2026/15

(21) Application number: 25205457.2

(22) Date of filing: **29.09.2025**

(51) International Patent Classification (IPC):
$H01M\ 4/04^{(2006.01)}$ $H01M\ 4/66^{(2006.01)}$
$H01M\ 10/052^{(2010.01)}$ $H01M\ 4/02^{(2006.01)}$

(52) Cooperative Patent Classification (CPC):
H01M 4/661; H01M 4/0404; H01M 4/667;
H01M 4/668; H01M 10/052; H01M 2004/021;
H01M 2004/027

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 04.10.2024 KR 20240135139

(71) Applicant: SAMSUNG SDI CO., LTD.
Yongin-si, Gyeonggi-do 17084 (KR)

(72) Inventors:
• SONG, Suho
17084 Yongin-si (KR)
• SEINO, Hiroshi
17084 Yongin-si (KR)

(74) Representative: Maiwald GmbH
Elisenhof
Elisenstraße 3
80335 München (DE)

(54) **COPPER SUBSTRATE FOR NEGATIVE ELECTRODE CURRENT COLLECTOR OF RECHARGEABLE LITHIUM BATTERY, NEGATIVE ELECTRODE INCLUDING SAME, AND RECHARGEABLE LITHIUM BATTERY INCLUDING THE SAME**

(57) Disclosed are a copper substrate for a negative electrode for a rechargeable lithium battery, a negative electrode including the copper substrate, and a rechargeable lithium battery including the negative electrode. The copper substrate has a microstrain according to Lab source Powder X-ray diffraction analysis of from about 0.04% to about 0.17%.

FIG. 1

EP 4 723 183 A1

**Description**

**BACKGROUND**

**1. Field**

A copper substrate for a negative electrode current collector of a rechargeable lithium battery, a negative electrode including the copper substrate, and a rechargeable lithium battery including the negative electrode are disclosed.

**2. Description of the Related Art**

With increasing use of electronic devices that use batteries, such as, e.g., mobile phones, laptop computers, electric vehicles, and the like, the demand for rechargeable batteries with high energy density and high capacity is increasing. Accordingly, improving the performance of rechargeable lithium batteries may be advantageous.

Rechargeable lithium batteries include a positive electrode and a negative electrode including an active material capable of intercalating and deintercalating lithium ions, and an electrolyte, and generate electrical energy through oxidation and reduction reactions when lithium ions are intercalated and deintercalated from the positive electrode and the negative electrode.

**SUMMARY**

Some example embodiments include a copper substrate for a negative electrode current collector of a rechargeable lithium battery exhibiting desired or improved bending characteristics.

Some example embodiments include a negative electrode for a rechargeable lithium battery including the copper substrate.

Some example embodiments include a rechargeable lithium battery including the negative electrode.

Some example embodiments include a copper substrate for a negative electrode current collector of a rechargeable lithium battery having a microstrain according to, e.g., Lab source Powder X-ray diffraction analysis in a range of from about 0.04% to about 0.17%.

Some example embodiments include a negative electrode for a rechargeable lithium battery including a current collector including the copper substrate, and a negative electrode active material layer located on the current collector and including a negative electrode active material.

Some example embodiments include a rechargeable lithium battery including the negative electrode.

According to some example embodiments, a copper substrate for a negative electrode current collector has improved bending phenomenon, and thus may be suitably used as a current collector.

**BRIEF DESCRIPTION OF THE DRAWINGS**

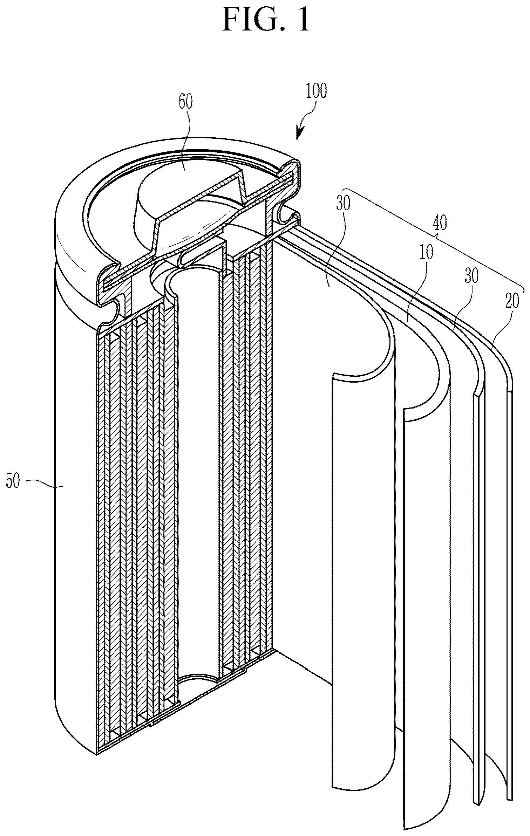

FIGS. 1 to 4 are cross-sectional views schematically illustrating rechargeable lithium batteries according to some example embodiments.

**DETAILED DESCRIPTION**

Hereinafter, example embodiments are described in detail. However, these embodiments are presented as an example, and the present disclosure is not limited thereto, and the present disclosure is defined by the scope of the claims described below.

As used herein, when specific definition is not otherwise provided, it is understood that when an element such as a layer, film, region, or substrate is referred to as being "on" another element, it may be directly on the other element, or intervening elements may also be present.

Unless otherwise specified in this specification, what is indicated in the singular may also include the plural. In addition, unless otherwise specified, "A or B" may indicate "including A, including B, or including A and B."

As used herein, "combination thereof" may refer to a mixture, a laminate, a composite, a copolymer, an alloy, a blend, a reaction product, and the like of the constituents.

As used herein, when a definition is not otherwise provided, the particle diameter may be an average particle diameter. In addition, the particle diameter may refer to an average particle diameter (D50), which indicates the diameter of particles having a cumulative volume of 50 volume% in the particle size distribution. The average particle diameter (D50) may be measured by a method known to those skilled in the art, for example, by a particle size analyzer, or by a transmission electron microscope image, or a scanning electron microscope image. Alternatively, a dynamic light-scattering measurement device is used to perform a data analysis, and the number of particles is counted for each particle size range. From this, the average particle diameter (D50) value may be readily obtained through a calculation. Alternatively, the average particle diameter may be measured using a laser diffraction method. When measuring by the laser diffraction method, the particles to be measured are dispersed in a dispersion medium, and then introduced into a commercially available laser diffraction particle diameter measuring device (e.g., Microtrac, Inc., MT 3000), and ultrasonic waves of about 28 kHz with an output of 60 W are irradiated to calculate an average particle diameter (D50) on the basis of 50% of the particle diameter distribution in the measuring device.

In some example embodiments, the average particle diameter may be measured by various methods described above, for example, through a particle size analyzer.

In some example embodiments, the thickness may be measured using an SEM or TEM image of a cross-section, but the present disclosure is not limited thereto and may be measured using any method that may measure thickness in the relevant field. The thickness may be an average thickness.

As used herein, "soft carbon" refers to a graphitizable carbon material that may be graphitized by heat treatment at high temperatures, for example 2800 °C, and "hard carbon" refers to non-graphitizable carbon material that is not graphitized by heat treatment. The soft carbon and hard carbon are known in the art.

In some example embodiments, crystalline carbon and amorphous carbon may be classified by X-ray diffraction analysis. The crystalline carbon includes natural graphite and artificial graphite. The natural graphite refers to naturally occurring graphite obtained by separation from minerals, and having, upon X-ray diffraction analysis, d002 in a range of about 3.350 Å to about 3.360 Å. The artificial graphite refers to graphite made by graphitization and having, upon X-ray diffraction analysis, d002 in a range of about 3.355 Å to about 3.365 Å. The amorphous carbon has a d002 of less than or equal to about 3.34 Å when analyzed by X-ray diffraction. The X-ray diffraction analysis (XRD) may use CuK$\alpha$ ray as a target line and uses an X-ray diffraction analyzer, for example, X'Pert (manufacturer: Malvern Panalytical), and to improve peak intensity resolution, the monochromator equipment may be removed and measured. The measurement conditions may be $2\theta$=10 ° to 80 °, scan rate (°/s) = 0.044 to 0.089, and step size (°/step) = 0.013 to 0.039.

In some example embodiments, the weight average molecular weight may be measured by gel permeation chromatography.

When the terms "about" or "substantially" are used in this specification in connection with a numerical value, it is intended that the associated numerical value include a tolerance of $\pm10\%$ around the stated numerical value. When ranges are specified, the range includes all values therebetween such as increments of 0.1%.

According to some example embodiments, a copper substrate for a negative electrode current collector of a rechargeable lithium battery has a microstrain in a range of from about 0.04% to about 0.17%, or about 0.04% to about 0.14% according to, e.g., Lab source Powder X-ray diffraction analysis.

The copper substrate having the above properties has desired or improved ductility, so that the copper substrate does not break or bend during the elongation process. Accordingly, the elongation process may be sufficiently applied to the copper substrate, thereby providing a thin film copper substrate, and consequently providing a high-capacity negative electrode. If the microstrain of the copper substrate is less than about 0.04%, the copper substrate may be excessively or substantially elongated (stretched), which may cause wrinkles to occur in the copper substrate. In addition, if the microstrain of the copper substrate exceeds about 0.17%, the elongation is too low to sufficiently apply the elongation process, and thus the thin film copper substrate may not be manufactured, and during the electrode manufacturing process, a curl phenomenon in which the copper substrate breaks or bends may occur during rolling.

The desired ductility of the copper substrate is confirmed by measuring the tensile strength thereof, but the tensile strength value may change depending on the tensile strength measurement conditions, which presents a challenge. According to some example embodiments, the microstrain is a property that does not change depending on the measurement conditions, and if the microstrain of the copper substrate is in a range of from about 0.04% to about 0.17%, the copper substrate exhibits desired ductility as a current collector.

In some example embodiments, microstrain refers to minute irregularities or distortions within the crystal lattice of a metal. The microstrain may occur if stress is applied to metal materials, such as, e.g., during cold working.

The microstrain may be obtained by, e.g., Lab source Powder X-ray diffraction analysis. Lab source refers to laboratory source, and Lab source Powder X-ray diffraction analysis refers to powder X-ray diffraction analysis using, for example, Cu Target Ka1 X-ray source. For example, this may be performed using CuK$\alpha$ rays.

For example, the microstrain may be calculated by utilizing the spreading phenomenon of X-ray diffraction lines, and may be calculated using Equation 1 below.

Equation 1:

$$\text{FWHM} \times \cos\theta = \varepsilon \times 4\sin\theta$$

In Equation 1, FWHM is the full width at half maximum, $\varepsilon$ is the slope (microstrain value), and $\theta$ is the Bragg angle. For example, a copper substrate according to some example embodiments may have a face-centered cubic (FCC) structure, with (111) planes, (200) planes, (220) planes, and (311) planes, and may have a structure that exhibits preferred orientation on the crystal planes. The Bragg angle of the (110) plane may be in a range of from about 42.5 ° to about 44.5 °, the Bragg angle of the (200) plane may be in a range of from about 49.5 ° to about 51.5 °, the Bragg angle of the (220) plane may be in a range of from about 73 ° to about 75 °, and the Bragg angle of the (311) plane may be in a range of from about 89 ° to about 91 °.

The full width at half maximum, FWHM, may be measured by X-ray diffraction analysis, and in some example embodiments, may be full widths at half maximum of the (111) plane, the (200) plane, the (220) plane, and the (311) plane.

The X-ray diffraction analysis of the full width at half maximum, FWHM may be performed under Lab source Powder X-ray diffraction analysis conditions. Here, $\varepsilon$ may be a slope value of a graph obtained by using the FWHM of each plane, and the Bragg angle of each plane and the origin, where the y-axis is FWHM x $\cos\theta$ and the x-axis is $4\sin\theta$.

Microstrain may be measured, for example, by the Williamson-Hall method (WH method), and for more information on microstrain and its calculation method, e.g., "Ron Jenkins, Robert L. Snyder, Introduction to X-ray Powder Diffractometry, Vol. 138, p. 93, 1996" provides relevant information.

A copper substrate according to some example embodiments may be applied as a negative electrode current collector for a rechargeable lithium battery. In the process of manufacturing a negative electrode for a rechargeable lithium battery, a process of rolling the negative electrode (roll pressing) is performed to make the negative electrode active material layer dense, and to increase the bonding strength between the copper substrate, which is a thin film current collector, and the negative electrode active material layer. However, the high pressure in this rolling process may cause damage, such as cracks or bending, to the copper substrate, which is a thin film current collector. According to some example embodiments, the copper substrate has a microstrain in a range of from about 0.04% to about 0.17%, thereby effectively reducing or suppressing crack occurrence or bending, thereby reducing or preventing damage from occurring during the rolling process.

The copper substrate may have a face-centered cubic structure and a crystal structure of space group 225, Fm-3m. The copper substrate may have three copper atoms at six face-centered positions (1/2 x 6) and one copper atom at eight vertex positions within the unit cell crystal lattice (1/8 x 8). The unit cell lattice parameter is approximately 3.615 Å.

In some example embodiments, the Lab source Powder X-ray diffraction analysis may be performed under the following measurement conditions.

> X-ray Target: Cu target
> X-Ray Wavelength: 1.5406 Å (CuK$\alpha$1) to 1.5444 Å (Cu K$\alpha$2)
> XRD tube voltage and current (Tube Voltage and Current): 30 kV to 40 kV and 30 mA to 40 mA
> Slit condition: Divergence Silt: 0.2 ° to 0.7 °/ Scattering Slit: 0.2 ° to 0.7 °/ Receiving Slit: 0.1 mm to 0.5 mm
> Scan conditions: Continuous Scan, 40 °$\leq 2\Theta \leq$120 °, Step size: 0.01 °/step to 0.05 °/step, Scan speed: 2.5 °/min to 3 °/min. Total measurement time: 10 to 40 minutes.

Sample stage rotation speed: a range of 1 rpm to 20 rpm (rotation speed per minute for X-ray diffraction analysis measurement)

In some example embodiments, the texture fraction (fraction of TC 220) of a (220) plane diffraction line according to X-ray diffraction of the copper substrate may be in a range of from about 10% to about 80%, or about 10% to about 60%. If the texture fraction of the copper substrate is within the above range, the occurrence of wrinkles and tearing of the copper substrate may be more effectively reduced or suppressed.

The texture fraction may be obtained by Lab source powder X-ray diffraction.

The texture fraction indicates the texture coefficient (TC) of each crystal plane in the face-centered cubic structure of copper converted into a percentage, and may be expressed as the (220) plane texture fraction of copper, or "Fraction of TC for Fm-3m Al (220)."

The texture fraction may be referred to as the ND (Normal Direction) texture fraction of the copper substrate. ND may be a vertical direction of the copper substrate surface, and may be a direction substantially perpendicular to RD (Rolling Direction) and TD (Transverse Direction). The texture fractions may be referenced from the International Union of Crystallography Al (PDF 04-0787), and the following references: "Isao YAGI et. al., Journal of the Ceramic Society of Japan, 102(3), p. 297 (1994)" or "C. S. Barret and T. B. Massalski, "Structure of Metals", Pergamon Press, Oxford, p. 204 (1980)."

For example, TC may be calculated using Equation 2 below.

Equation 2:

$$TC\left(hkl\right) \quad \frac{I\ (hkl)\ (I_0 hkl\ )}{(1/n)\cdot \Sigma\ I(hkl)\ I_0(hkl)}$$

In Equation 2, I(hkl) and $I_0$(hkl) are integrated intensity values of the peaks measured in the X-ray diffraction of the (hkl) plane of the experimental specimen and the standard powder specimen, respectively, n is the total number of diffraction planes, and $\Sigma$ represents a sum. The (hkl) plane refers to a lattice plane determined by the Miller index, and in some example embodiments refers to the Cu crystal planes (111), (200), (220), and (311). The TC of (220) plane is the value entered for (220) plane in Equation 2.

The X-ray diffraction measurement may be performed under the Lab source Powder X-ray diffraction analysis conditions.

In some example embodiments, the copper substrate had a thickness in a range of from about $1\mu$m to about $20\mu$m, about $5\mu$m to about $20\mu$m, or about $5\mu$m to about $12\mu$m. The copper substrate, when the thickness thereof is within the above range, may serve as desired as a current collector evenly transferring electrons to a negative electrode and thus exhibit desired electrochemical stability and electrical conductivity.

In some example embodiments, the copper substrate may be a single layer composed of or including copper or may have a multi-layer structure. The multi-layer structure may be a three-layer structure including a polymer layer interposed between two copper layers (e.g., a first copper layer, and a second copper layer).

The polymer layer may be composed of or include a polymer such as polyethylene terephthalate, polypropylene, or a combination thereof.

If the copper substrate has the multi-layer structure including the polymer layer, the polymer layer may reduce or block a flow of electrons, that is, a current during the battery penetration, which may further improve safety.

Herein, each, or at least one, of the first and second copper layers composed of or including copper has a thickness in a range of from about $0.5\mu$m to about $3\mu$m, or about $0.5\mu$m to about $2\mu$m. The polymer layer may have a thickness in a range of from about $3\mu$m to about $6\mu$m, or about $4\mu$m to about $5\mu$m.

A copper substrate satisfying the above-described properties may be obtained by applying a process capable of controlling microstrain. For example, the copper substrate may be obtained by induction heat annealing, or vacuum-drying, a general copper substrate or a copper substrate with high strength (e.g., ultra-high strength) and/or phase-change. The induction heat annealing may be performed at a temperature in a range of from about 50 °C to about 200 °C. The vacuum-drying may be performed at a temperature in a range of from about 25 °C to about 145 °C. The copper substrate according to some example embodiments is obtained through the high-temperature heat treatment but had no significant increase in grain sizes despite the high temperature heat treatment, and thus no noticeable issue with being, e.g., torn or wrinkled. Accordingly, this may be used to more effectively reduce or suppress the bending phenomenon that may occur during the roll-pressing process during the electrode manufacturing.

Negative Electrode:

According to some example embodiments, a negative electrode includes a negative electrode active material layer on the current collector.

The negative electrode active material layer may include a negative electrode active material, and may further include a binder and/or a conductive material.

For example, the negative electrode active material layer may include about 90 wt% to about 99 wt% of the negative electrode active material, and about 1 wt% to about 5 wt% of the binder. If the negative electrode active material layer further includes a conductive material, the negative electrode active material may be included in an amount in a range of about 90 wt% to about 99 wt%, the binder in an amount in a range of about 0.5 wt% to about 5 wt%, and the conductive material in an amount in a range of about 0.5 wt% to about 5 wt%.

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, for example crystalline carbon, amorphous carbon or a combination thereof. The crystalline carbon may be or include graphite such as at least one of unspecified-shaped, sheet-shaped, flake-shaped, sphere-shaped, or fiber-shaped natural graphite or artificial graphite, and the amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, $SiO_x$ ($0<x\leq2$), $M\text{-}SiO_x$ ($0<x\leq2$, and M is Li or Mg), a Si-Q alloy (wherein Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO_2$, a Sn-based alloy, or a combination thereof.

The silicon-carbon composite may be or include a composite of silicon and carbon. The carbon may include amorphous carbon, or amorphous carbon and crystalline carbon. The crystalline carbon may be unspecified-shaped, sheet-shaped, flake-shaped, sphere-shaped, or fiber-shaped natural graphite or artificial graphite. The amorphous carbon may be or include at least one of soft carbon, hard carbon, a mesophase pitch carbonized product, calcined coke, or a combination thereof.

The silicon-carbon composite may be in the form of silicon particles, and amorphous carbon coated on the surface of the silicon particles. For example, the silicon-carbon composite may include silicon particles and an amorphous carbon coating layer on the surface of the silicon particles. In another example embodiments, the silicon-carbon composite may include a secondary particle (core) in which silicon primary particles are agglomerated, and an amorphous carbon coating layer (shell) on the surface of the secondary particle. The amorphous carbon may also be between the silicon primary particles, and, for example, the silicon primary particles may be coated with the amorphous carbon. For example, the secondary particles may be dispersed in an amorphous carbon matrix. The silicon primary particles may be or include nano silicon particles. An average particle diameter of the nano silicon particles may be in a range of from about 10 nm to about 900 nm, about 10 nm to about 800 nm, about 10 nm to about 500 nm, about 10 nm to about 300 nm, or about 10 nm to about 200 nm. If the average particle diameter of the nano silicon particles is within the above range, excessive or significant volume expansion that occurs during charging and discharging may be reduced or suppressed, and disconnection of the conductive path due to particle crushing during charging and discharging may be reduced or prevented. In some example embodiments, the particle size of the secondary particles may not be particularly limited.

A thickness of the amorphous carbon coating layer may be controlled as desired, but may be, for example, in a range of from about 2 nm to about 800 nm, about 5 nm to about 600 nm, about 10 nm to about 400 nm, or about 20 nm to about 200 nm. The thickness of the amorphous carbon coating layer may be measured by, e.g., SEM or TEM images of a cross-section of the silicon-carbon composite, but is not limited thereto, and any method capable of measuring the thickness of the amorphous carbon coating layer in the relevant field may be used.

The average particle size of the silicon-carbon composite may be suitably controlled, and may be, for example, less than or equal to about 30 $\mu$m, for example, in a range of from about 1 $\mu$m to about 30 $\mu$m, about 2 $\mu$m to about 25 $\mu$m, about 3 $\mu$m to about 20 $\mu$m, or about 5 $\mu$m to about 15 $\mu$m.

Based on 100 wt% of the silicon-carbon composite, an amount of the silicon particles may be in a range of from about 30 wt% to about 70 wt%, or about 40 wt% to about 65 wt%. Additionally, the amount of the amorphous carbon may be in a range of from about 30 wt% to about 70 wt%, or about 35 wt% to about 60 wt%, based on 100 wt% of the total silicon-carbon composite. If the amount of silicon particles and amorphous carbon satisfies the above range, higher capacity may be achieved.

In some example embodiments, the silicon-carbon composite may include a core including silicon particles and crystalline carbon and an amorphous carbon coating layer on a surface of the core. For example, the silicon-carbon composite may include a core including silicon primary particles and secondary particles agglomerated with crystalline carbon, and an amorphous carbon coating layer on the core. The amorphous carbon may be located between silicon primary particles, or between crystalline carbon, so that amorphous carbon may be filled between silicon primary particles or crystalline carbon.

An amount of the crystalline carbon may be in a range of from about 1 wt% to about 20 wt%, for example about 3 wt% to about 17 wt%, or about 5 wt% to about 15 wt% 100 wt% of the total of the silicon particles, the amorphous carbon, and the crystalline carbon. If crystalline carbon is included in the above amount range, the conductivity may be further improved.

The negative electrode according to some example embodiments may further include a carbon-based negative electrode active material together with a silicon-based negative electrode active material as the negative electrode active material. If a silicon-based negative electrode active material and a carbon-based negative electrode active material are included together, a mixing ratio of the silicon-based negative electrode active material and the carbon-based negative electrode active material may be a weight ratio in a range of from about 1:99 to about 50:50. For example, the mixing ratio of the silicon-based negative electrode active material and the carbon-based negative electrode active material may be a weight ratio in a range of from about 5:95 to about 20:80.

The binder is configured to attach the negative electrode active material particles to each other, and to attach the negative electrode active material to the current collector. The binder may include at least one of a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If an aqueous binder is included as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li. The cellulose-based compound may be referred to as a thickener because the cellulose-based compound provides viscosity, and may also be referred to as a binder. Accordingly, the amount of the cellulose-based compound may be adjusted as desired within a use amount of binder.

The dry binder may be or include a polymer material capable of being fibrous, and may be or include, for example, at least one of polytetrafluoroethylene, polyvinylidene fluoride, a polyvinylidene fluoride-hexafluoropropylene copolymer, polyethylene oxide, or a combination thereof.

The conductive material is included to impart conductivity to the electrode, and any material that does not cause chemical change and conducts electrons may be included in the battery. Examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in a form of a metal powder or a metal fiber; a conductive polymer such as a polyphenylene derivative; or a mixture thereof.

Rechargeable Lithium Battery:

Some example embodiments include a rechargeable lithium battery including the negative electrode, the positive electrode, and the electrolyte. Positive Electrode:

The positive electrode may include a current collector, and a positive electrode active material layer on the current collector. The positive electrode active material layer includes a positive electrode active material, and may further include a binder and/or a conductive material.

For example, the positive electrode may further include an additive that may act as a sacrificial positive electrode.

An amount of the positive electrode active material may be in a range of from about 90 wt% to about 99.5 wt% based on 100 wt% of the positive electrode active material layer, and the amount of each of the binder and the conductive material may be in a range of from about 0.5 wt% to about 5 wt%, respectively, based on 100 wt% of the positive electrode active material layer.

The positive electrode active material may include a compound (lithiated intercalation compound) capable of intercalating and deintercalating lithium. For example, at least one of a composite oxide of lithium and a metal such as or including at least one of cobalt, manganese, nickel, and combinations thereof may be included.

The composite oxide may be or include a lithium transition metal composite oxide, and examples thereof may include at least one of a lithium nickel-based oxide, a lithium cobalt-based oxide, a lithium manganese-based oxide, a lithium iron phosphate-based compound, a cobalt-free lithium nickel-manganese-based oxide, or a combination thereof.

As an example, a compound represented by any of the following chemical formulas may be included. $Li_aA_{1-b}X_bO_{2-c}D_c$ ($0.90 \leq a \leq 1.8$, $0 \leq b \leq 0.5$, $0 \leq c \leq 0.05$); $Li_aMn_{2-b}X_bO_{4-c}D_c$ ($0.90 \leq a \leq 1.8$, $0 \leq b \leq 0.5$, $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_bCo_cL^1_{d-}G_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); $Li_{(3-f)}Fe_2(PO_4)_3$ ($0 \leq f \leq 2$); and $Li_aFePO_4$ ($0.90 \leq a \leq 1.8$).

In the above chemical formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and $L^1$ is or includes at least one of Mn, Al, or a combination thereof.

For example, the positive electrode active material may be or include a high nickel-based positive electrode active material having a nickel amount that is greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may achieve high capacity, and may be applied to a high-capacity, high-density rechargeable lithium battery.

The binder is configured to attach the positive electrode active material particles to each other, and to attach the positive electrode active material to the current collector. Examples of the binder may include at least one of polyvinyl alcohol, carboxymethylcellulose, hydroxypropylcellulose, diacetylcellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, but are not limited thereto.

The conductive material is included to impart conductivity to the electrode, and any material that does not cause chemical change and that conducts electrons may be included in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material containing at least one of copper, nickel, aluminum, silver, and the like, in the form of a metal powder or a metal fiber; a conductive polymer such as a polyphenylene derivative; or a mixture thereof.

The current collector may include Al, but is not limited thereto.

Electrolyte:

The electrolyte includes at least one of a non-aqueous organic solvent and a lithium salt.

The non-aqueous organic solvent is configured as a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethylacetate, methylpropionate, ethylpropionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like and the aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like. The non-aqueous organic solvents may be included alone or in combination of two or more solvents.

In an example, when using a carbonate-based solvent, a cyclic carbonate and a chain carbonate may be mixed, and the cyclic carbonate and the chain carbonate may be mixed in a volume ratio in a range of from about 1:1 to about 1:9.

The electrolyte may further include at least one of vinylethyl carbonate, vinylene carbonate, difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, or a combination thereof as an additive.

The lithium salt dissolved in the organic solvent is configured to supply lithium ions in a battery, to enable a basic operation of a rechargeable lithium battery, and to improve transportation of the lithium ions between positive and negative electrodes. For example, the lithium salt may include at least one of $LiPF_6$, $LiBF_4$, $LiSbF_6$, $LiAsF_6$, $LiClO_4$, $LiAlO_2$, $LiAlCl_4$, $LiPO_2F_2$, $LiCl$, $LiI$, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)$$(C_yF_{2y+1}SO_2)$, x and y are integers in a range of about 1 to about 20, lithium trifluoromethane sulfonate, lithium tetrafluoroethanesulfonate, lithium difluorobis(oxalato)phosphate (LiDFBOP), and lithium bis(oxalato)borate (LiBOB).

Separator:

Depending on the type of the rechargeable lithium battery, a separator may be present between the positive electrode and the negative electrode. The separator may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one surface, or on both surfaces, of the porous substrate.

The porous substrate may be or include a polymer film formed of or including any one of polyolefin such as at least one of polyethylene and polypropylene, polyester such as at least one of polyethylene terephthalate and polybutylene terephthalate, polyacetal, polyamide, polyimide, polycarbonate, polyether ketone, polyarylether ether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON®, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked together.

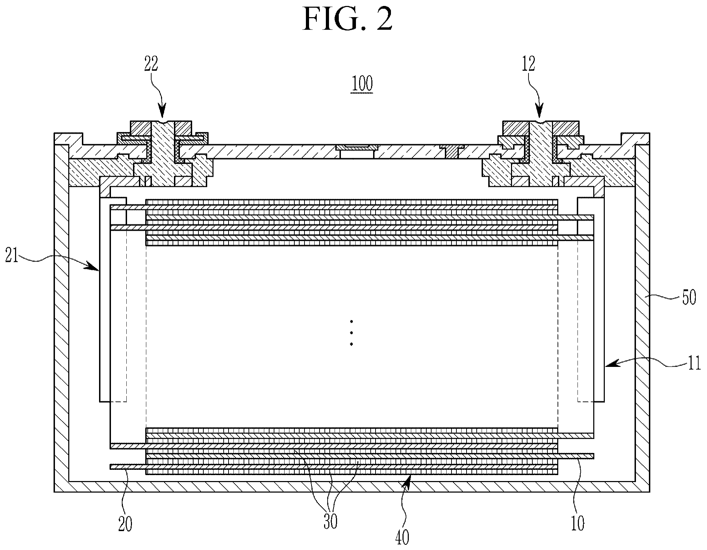

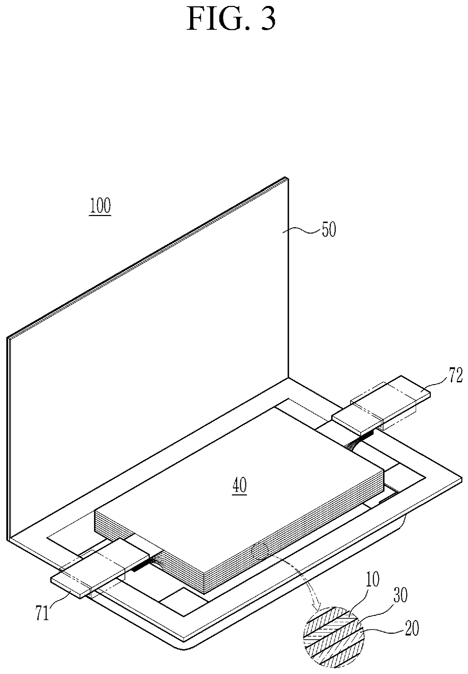

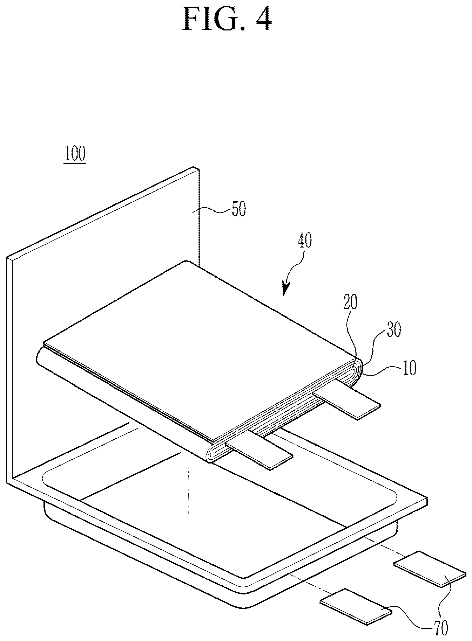

The rechargeable lithium battery may be classified into cylindrical, prismatic, pouch, coin, and the like, depending on their shape. FIGS. 1 to 4 are schematic views illustrating a rechargeable lithium battery according to some example embodiments. FIG. 1 illustrates a cylindrical battery, FIG. 2 illustrates a prismatic battery, and FIGS. 3 and 4 illustrate pouch-type batteries. Referring to FIGS. 1 to 4, the rechargeable lithium battery 100 includes an electrode assembly 40 including a separator 30 between a positive electrode 10 and a negative electrode 20, and a case in which the electrode assembly 40 is included. The positive electrode 10, the negative electrode 20, and the separator 30 may be impregnated with an electrolyte (not shown). The rechargeable lithium battery 100 may include a sealing member 60 that seals the case 50 as shown in FIG. 2. In FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70 illustrated in FIG. 4, or a positive electrode tab 71 and a negative electrode tab 72 illustrated in FIG. 3, the electrode tabs 70/71/72 forming an electrical path for inducing the current formed in the electrode assembly 40 to the outside of the battery 100.

The rechargeable lithium battery according to some example embodiments may be applicable to automobiles, mobile phones, and/or various types of electric devices, but the present disclosure is not limited thereto.

Examples and comparative examples of the present disclosure are described below. However, the following examples are only examples of the present disclosure, and the present disclosure is not limited to the following examples.

Example 1:

A current collector was manufactured by vacuum-drying a 10$\mu$m-thick Cu substrate at 25 °C.

Example 2:

A current collector was manufactured by vacuum-drying a 8$\mu$m-thick Cu substrate at 25 °C.

Example 3:

A current collector was manufactured by vacuum-drying a 6$\mu$m-thick Cu substrate at 25 °C.

Example 4:

A current collector was manufactured by vacuum-drying a 6$\mu$m-thick Cu substrate with ultra-high strength at 25 °C.

Example 5:

A current collector was manufactured by vacuum-drying a 6$\mu$m-thick Cu substrate with ultra-high strength and phase-change at 25 °C.

Example 6:

A current collector was manufactured by vacuum-drying a 5$\mu$m-thick Cu substrate with high strength at 25 °C.

Example 7:

A current collector was manufactured by vacuum-drying a 6$\mu$m-thick Cu substrate with ultra-high strength and phase-change at 145 °C.

Example 8:

A current collector was manufactured by vacuum-drying a 8$\mu$m-thick Cu substrate at 25 °C, and then induction heat-annealing the Cu substrate. The induction heat annealing was performed at 100 °C to 250 °C.

Example 9:

A current collector was manufactured by vacuum-drying a first Cu layer with a thickness of 1$\mu$m / a polyethylene terephthalate layer with a thickness of 4.5$\mu$m / a second Cu layer with a thickness of at 25 °C.

Comparative Example 1:

A current collector was manufactured by vacuum-drying a 6$\mu$m-thick Cu substrate at 146 °C.

Comparative Example 2:

A current collector was manufactured by vacuum-drying a 6$\mu$m-thick Cu substrate with ultra-high strength at 10 °C.

Experimental Example 1) Lab Source Powder XRD Evaluation

The current collectors according to Examples 1 to 9 and Comparative Examples 1 and 2 were evaluated with respect to Lab Source Powder XRD by using Powder XRD (D8 Advance) made by Bruker under the following conditions.

- X-ray wavelength: 1.5406 Å (CuK$\alpha$1)
- Slit condition: Divergence Silt 0.5 °, Scattering Slit 0.5 °, Receiving Slit 0.20 mm
- Scan condition: Continuous Scan, 35 °$\leq$2$\Theta$$\leq$120 °, 0.01 °/step, 2.84 °/min, total measurement time 30 min.
- Sample stage rotation speed: 10 rpm

## Equation 1:

$$\text{FWHM} \times \cos\Theta = \varepsilon \times 4\sin\Theta$$

$\text{FWHM}_{(111)}$, $\text{FWHM}_{(200)}$, $\text{FWHM}_{(220)}$, $\text{FWHM}_{(311)}$ obtained as the XRD evaluation results were used with $\cos\Theta$ and $\sin\Theta$ (where $\Theta$ is a Bragg angle of the (110) plane, (200) plane, (220) plane, and (311) plane) to calculate a slope according to Equation 1, which is microstrain ($\varepsilon$), and the results are shown in Table 1.

In addition, a texture fraction was obtained according to Equation 2 from integral intensity of a peak in the X-ray diffraction measurement on the (hkl) plane as the XRD evaluation results. The results are shown in Table 1 below.

Experimental Example 2) Evaluation of Elongation and Tensile Strength

The current collectors according to Examples 1 to 9 were measured with respect to elongation and tensile strength by using a universal testing machine (UTM) (3342, Instron). The results are shown in Table 1.
The current collector of Comparative Example 1 had excessive or significant wrinkles, and so the elongation and tensile strength tests were not performed. In addition, the current collector of Comparative Example 2 had an excessive or significant increase in resistance and excessive or significant cracks, and so the elongation and tensile strength tests were not performed.

Table 1:

| | Lab source Powder XRD | | Elongation (%) | UTM tensile strength (N/mm$^2$) |
| --- | --- | --- | --- | --- |
| | Microstrain (%) | Texture fraction (%) | | |
| Example 1 | 0.044 | 23 | 7.7 | 332 |
| Example 2 | 0.049 | 19 | 8.8 | 338 |
| Example 3 | 0.049 | 19 | 7.1 | 351 |

(continued)

| | Lab source Powder XRD | | Elongation (%) | UTM tensile strength (N/mm$^2$) |
| --- | --- | --- | --- | --- |
| | Microstrain (%) | Texture fraction (%) | | |
| Example 4 | 0.170 | 57 | 6.5 | 622 |
| Example 5 | 0.099 | 16 | 3.6 | 530 |
| Example 6 | 0.060 | 21 | 2.9 | 415 |
| Example 7 | 0.038 | 25 | 12.2 | 264 |
| Example 8 | 0.044 | 25 | 13.3 | 267 |
| Example 9 | 0.050 | 11 | 23.8 | 228 |

As shown in Table 1, Examples 1 to 9, which had microstrain of 0.044% to 0.17%, exhibited desired or improved elongation.

Experimental Example 3) Grain Size Evaluation

The copper foil substrates according to Example 3 and Comparative Example 2 were heat-treated at 200 °C for 1 hour to measure a grain size by using EBSD (electron backscatter diffraction). As a result, the copper foil substrate of Example 3 had a grain size increased from 1.0 μm to 1.1 μm, but the copper foil substrate of Comparative Example 2 had a grain size significantly increased from 0.7 μm to 1.5 μm.

While this disclosure has been described in connection with what is presently considered to be practical example embodiments, the disclosure is not limited to the disclosed example embodiments, but, on the contrary, is intended to cover various modifications and equivalent arrangements included within the spirit and scope of the appended claims.

**Claims**

1. A copper substrate for a negative electrode current collector of a rechargeable lithium battery, the copper substrate comprising:
a microstrain determined by X-ray diffraction analysis in a range of from about 0.04% to about 0.17%.

2. The copper substrate for a negative electrode current collector of a rechargeable lithium battery as claimed in claim 1, wherein the microstrain is in a range of from about 0.04% to about 0.14%.

3. The copper substrate for a negative electrode current collector of a rechargeable lithium battery as claimed in claim 1 or 2, wherein a texture fraction of a (220) plane diffraction line according to the X-ray diffraction density of the copper substrate is in a range of from about 10% to about 80%.

4. The copper substrate for a negative electrode current collector of a rechargeable lithium battery as claimed in claim 3, wherein the fraction of the (220) plane diffraction line according to the X-ray diffraction density of the copper substrate is in a range of from about 10% to about 60%.

5. The copper substrate for a negative electrode current collector of a rechargeable lithium battery as claimed in any one of claims 1 to 4, wherein a thickness of the copper substrate is in a range of from about 1 μm to about 20 μm.

6. The copper substrate for a negative electrode current collector of a rechargeable lithium battery as claimed in any one of claims 1 to 5, wherein the X-ray diffraction analysis is performed using a CuKα ray.

7. The copper substrate for a negative electrode current collector of a rechargeable lithium battery as claimed in any one of claims 1 to 6, wherein the copper substrate further comprises a polymer layer.

8. The copper substrate for a negative electrode current collector of a rechargeable lithium battery as claimed in claim 7, wherein the copper substrate comprises:

a first copper layer and a second copper layer, and

a polymer layer between the first copper layer and the second copper layer.

9. The copper substrate for a negative electrode current collector of a rechargeable lithium battery as claimed in any one of claims 1 to 8, wherein the microstrain is determined according to a Lab source Powder X-ray diffraction analysis.

10. A negative electrode for a rechargeable lithium battery, the negative electrode comprising:

a current collector including the copper substrate as claimed in any one of claims 1 to 9; and
a negative electrode active material layer located on the current collector and including a negative electrode active material.

11. A rechargeable lithium battery, comprising:

a negative electrode including a current collector including the copper substrate as claimed in any one of claims 1 to 9; and
a negative electrode active material layer located on the current collector and including a negative electrode active material;
a positive electrode including a positive electrode active material; and
a non-aqueous electrolyte.

# FIG. 1

FIG. 2

# FIG. 3

# FIG. 4

# EP 4 723 183 A1

## EUROPEAN SEARCH REPORT

**Application Number**

EP 25 20 5457

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2007 273390 A (DENSO CORP; TOYOTA MOTOR CORP) 18 October 2007 (2007-10-18) | 1-6,9-11 | INV.<br>H01M4/04 |
| Y | * the whole document * | 7,8 | H01M4/66<br>H01M10/052 |
| X | CN 114 447 340 A (SONGSHAN LAKE MAT LAB) 6 May 2022 (2022-05-06) | 1-6,9-11 | H01M4/02 |
| Y | * the whole document * | 7,8 | |
| Y | EP 3 972 018 A1 (CONTEMPORARY AMPEREX TECHNOLOGY CO LTD [CN]) 23 March 2022 (2022-03-23) * paragraphs [0006], [0009] * * paragraph [0016] - paragraph [0020] * * paragraph [0024] * * paragraph [0036] * | 7,8 | |
| T | CHRIR ANASS ET AL: "Effect of post-annealing on microstructure and electrical properties of BaTiO3 thick films grown by aerosol deposition (AD)", JOURNAL OF THE EUROPEAN CERAMIC SOCIETY, ELSEVIER, AMSTERDAM, NL, vol. 44, no. 6, 24 January 2024 (2024-01-24), pages 3965-3984, XP087465739, ISSN: 0955-2219, DOI: 10.1016/J.JEURCERAMSOC.2024.01.073 [retrieved on 2024-01-24] * abstract * * page 1649 * | | |
| A | US 2024/297309 A1 (JEONG YEON BEOM [KR] ET AL) 5 September 2024 (2024-09-05) * the whole document * | 1-11 | |

TECHNICAL FIELDS SEARCHED (IPC)

H01M

-/--

The present search report has been drawn up for all claims

| Place of search | Date of completion of the search | Examiner |
|---|---|---|
| Munich | 13 February 2026 | Tylus, Urszula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 25 20 5457

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KR 2024 0068348 A (SK ON CO LTD [KR]; SK INNOVATION CO LTD [KR]) 17 May 2024 (2024-05-17) * the whole document * ----- | 1-11 | |
| A | TAN WEN LIANG ET AL: "X-ray diffraction of photovoltaic perovskites: Principles and applications", APPLIED PHYSICS REVIEWS, AMERICAN INSTITUTE OF PHYSICS, 2 HUNTINGTON QUADRANGLE, MELVILLE, NY 11747, vol. 9, no. 2, 25 May 2022 (2022-05-25), XP012266017, DOI: 10.1063/5.0076665 [retrieved on 2022-05-25] * the whole document * ----- | 1-11 | |

TECHNICAL FIELDS
SEARCHED       (IPC)

The present search report has been drawn up for all claims

| Place of search | Date of completion of the search | Examiner |
|---|---|---|
| Munich | 13 February 2026 | Tylus, Urszula |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................................
& : member of the same patent family, corresponding
document

EPO FORM 1503 03.82 (P04C01)

page 2 of 2

## ANNEX TO THE EUROPEAN SEARCH REPORT
## ON EUROPEAN PATENT APPLICATION NO.

EP 25 20 5457

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2026

| Patent document cited in search report | | | Publication date | Patent family member(s) | | Publication date |
|---|---|---|---|---|---|---|
| JP 2007273390 | A | | 18-10-2007 | JP | 4954585 B2 | 20-06-2012 |
| | | | | JP | 2007273390 A | 18-10-2007 |
| CN 114447340 | A | | 06-05-2022 | NONE | | |
| EP 3972018 | A1 | | 23-03-2022 | CN | 110943228 A | 31-03-2020 |
| | | | | CN | 113363499 A | 07-09-2021 |
| | | | | EP | 3972018 A1 | 23-03-2022 |
| | | | | HU | E067140 T2 | 28-10-2024 |
| | | | | JP | 7585223 B2 | 18-11-2024 |
| | | | | JP | 2022528846 A | 16-06-2022 |
| | | | | KR | 20210143852 A | 29-11-2021 |
| | | | | US | 2022085380 A1 | 17-03-2022 |
| | | | | WO | 2020237712 A1 | 03-12-2020 |
| US 2024297309 | A1 | | 05-09-2024 | CN | 120712662 A | 26-09-2025 |
| | | | | EP | 4657573 A1 | 03-12-2025 |
| | | | | US | 2024297309 A1 | 05-09-2024 |
| | | | | WO | 2024186068 A1 | 12-09-2024 |
| KR 20240068348 | A | | 17-05-2024 | CN | 120202558 A | 24-06-2025 |
| | | | | EP | 4611071 A1 | 03-09-2025 |
| | | | | KR | 20240068348 A | 17-05-2024 |
| | | | | WO | 2024101556 A1 | 16-05-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RON JENKINS** ; **ROBERT L. SNYDER**. *Introduction to X-ray Powder Diffractometry*, 1996, vol. 138, 93

- **ISAO YAGI**. *Journal of the Ceramic Society of Japan*, 1994, vol. 102 (3), 297
- **C. S. BARRET** ; **T. B. MASSALSKI**. Structure of Metals. Pergamon Press, 1980, 204